# EUROPEAN PATENT SPECIFICATION

(11) **EP 0 754 587 B1**
(45) Date of publication and mention of the grant of the patent: **29.05.2002**
(21) Application number: 96111791.8
(22) Date of filing: 22.07.1996
(51) Int. Cl.: B60K 31/04

(54) **A speed limit control method for vehicles**
Verfahren zur Geschwindigkeitsbegrenzungssteuerung für Kraftfahrzeuge
Méthode de commande de limitation de vitesse pour véhicules

(30) Priority: 21.07.1995 KR 9521584
(43) Date of publication of application: 22.01.1997
(73) Proprietor: HYUNDAI MOTOR COMPANY, Jongro-ku, Seoul 110-270 (KR)
(72) Inventor: Park, Seong Min, Kwangjin-ku, Seoul (KR)
(74) Representative: TER MEER STEINMEISTER & PARTNER GbR

(56) References cited:
- EP-A- 0 444 894
- GB-A- 2 265 994

## Description

The present invention relates to a speed limit control method for vehicles, and more particularly, to a speed limit control method for controlling both the amount of fuel injection and ignition timing of an engine so as to restrict speed.

An vehicle's top speed or a maximum revolutions per minute (RPM) of an engine is normally limited by a speed limit particular to each country so as to enhance safety and even save lives.

In limiting the speed or RPMs for vehicles for the above reasons, the prior art decelerates the vehicle by diminishing the amount of fuel injection when the speed of the vehicle is over a predetermined speed.

If the vehicle is travelling at a high speed, it is decelerated by diminishing the amount of fuel injection so as to limit overspeeding, and an engine power is suddenly diminished so that the engine receives a shock by the abrupt difference in torque.

Accordingly, this sudden change in torque causes problems in that the life of the engine is shortened.

GB 2 265 994 discloses a twin throttle cruise control having a first and a second control device for respectively controlling first and second throttle valves in accordance with a vehicle speed and in accordance with front and rear wheel speeds, respectively.

The control characteristic, i.e. the relationship between the actuator manipulation amount of the first throttle valve and the engine torque is affected by the angle of the second throttle valve. Instead of the second throttle valve the ignition timings of the individual cylinders can be shifted for varying this control characteristic.

EP 0 444 894 discloses an engine output controlling system for vehicle comprising slip detecting means constructed so as to obtain a slip changing rate of the driving wheels and retard amount setting means for setting a retard amount with which the ignition timing is to be retarded in accordance with the slip changing rate detected by the slip detecting means for preventing or reducing slip of the driving wheels.

In addition, this engine output controlling system comprises controlling means constructed so as to put the throttle valve opening into a fully closed condition when the retard amount for retarding ignition timing is greater than a predetermined value. Thus, according to closing the throttle valve opening the fuel injection is reduced. Further, injection of fuel is reduced in dependence on the retard amount.

### SUMMARY

It is an object of the present invention to provide a speed limit control method for vehicles that avoids sudden changes in torque when limiting overspeeding, i.e. when preventing a vehicle from running faster than a set speed limit.

This object is achieved by the method according to claim 1. Advantageous developments and refinements of the invention are described in the depending claims.

According to the present invention engine shock generated by torque difference is diminished by controlling both the ignition timing of the engine and the amount of fuel injection so as to control vehicular speed so that it stays under a speed limit. In particular, the ignition timing is delayed first when the vehicle speed exceeds a first predetermined speed and then the injection of fuel is stopped when the vehicle speed becomes faster in spite of the ignition timing delay and exceeds a second predetermined speed.

### BRIEF DESCRIPTION ON THE DRAWINGS

The accompanying drawings, which are incorporated in and constitute a part of the specification, illustrate an embodiment of the invention, and, together with the description, serve to explain the principles of the invention:
Fig. 1 is a block diagram illustrating a speed limit control system for vehicles in accordance with a preferred embodiment of the present invention;

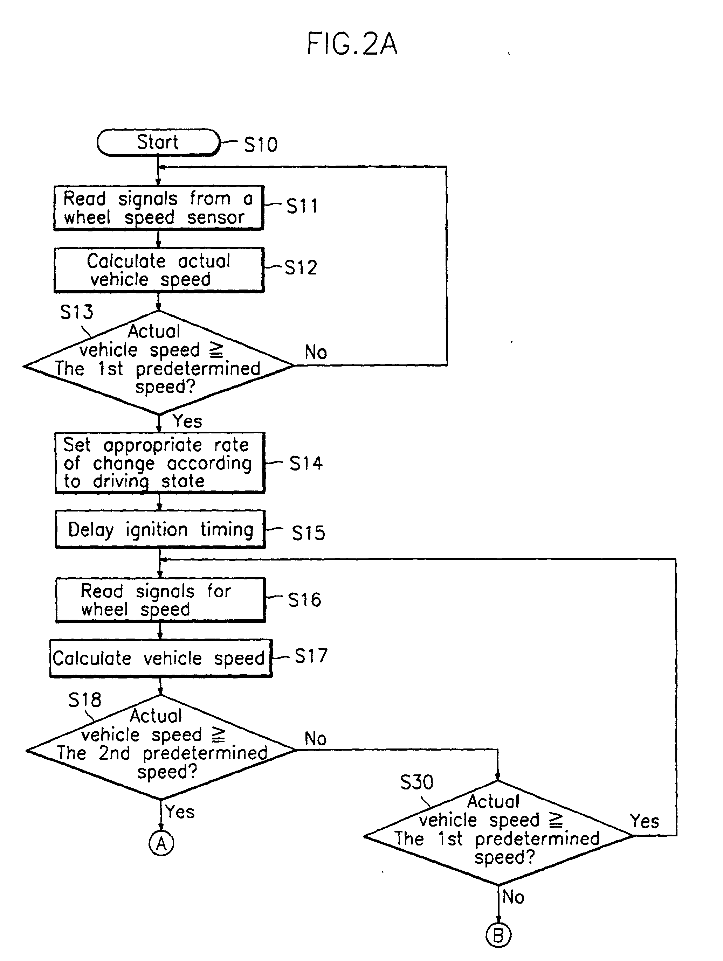

Fig. 2A is a flowchart illustrating a speed limit control method for vehicles in accordance with a preferred embodiment of the present invention;

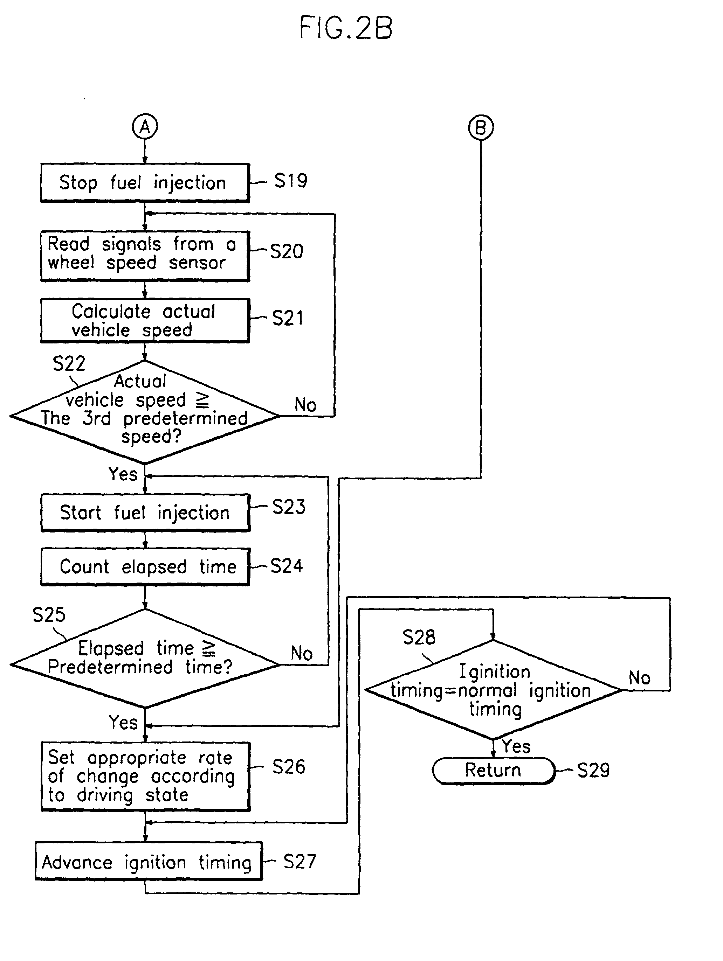

Fig. 2B is a flowchart continued from Fig. 2B; and
Fig. 3 is a graph illustrating a control action in accordance with a preferred embodiment of the present invention.

### DESCRIPTION

A preferred embodiment of the present invention will now be described in detail with reference to the accompanying drawings.

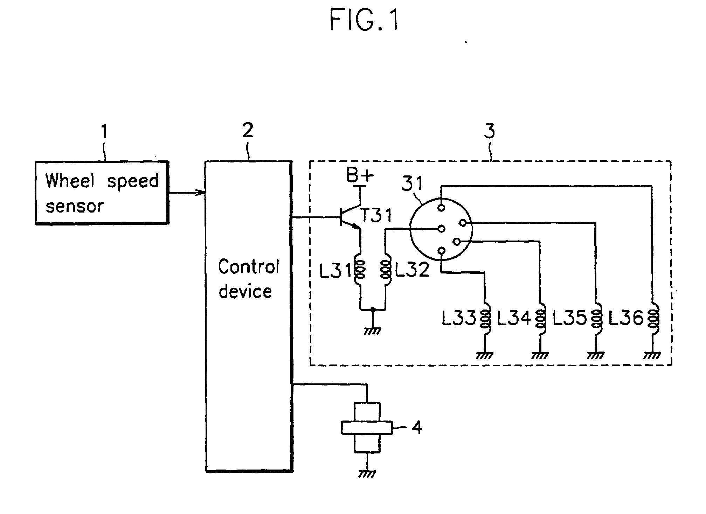

Referring to Fig. 1, a speed limit control system according to the present invention includes a wheel speed sensing portion 1 for generating electric signals in accordance with an actual vehicle speed; a control device 2 for outputting control signals, which judges an actual vehicle speed in accordance with signals from the wheel speed sensing portion and controls ignition timing and the amount of fuel injection of an engine in order not to exceed a predetermined vehicle speed; an ignition portion 3, which ignites at predetermined timing by signals, the signals being outputted from the engine control device 2; and an injection portion 4, which injects the predetermined amount of fuel by signals, the signals being outputted from the engine control device 2.

The execution of the speed limit control system, which is structured like the above has the following steps.

When the source of electric power for an execution is supplied, the control device 2 starts to an execution S10 for controlling the engine in order that the actual vehicle speed does not exceed the predetermined vehicle speed.

Next, the control device 2 reads signals S11 from the wheel speed sensing portion 1 and calculates S12 the present actual vehicle speed.

More precisely, the above steps are done through following process: the wheel speed sensing portion 1 generates signals in accordance with the state of wheel rotation,
the magnetic field of the wheel speed sensor, which is disposed in a knuckle is intermitted in accordance with the rotation state of a sensor rotor mounted on a drive shaft or a wheel hub, and
an output voltage is changed in accordance with rotation speed variation of the sensor rotor and the control device 2 calculates the actual vehicle speed by judging the output voltage.

If the actual vehicle speed is calculated by using the output signals of the wheel speed sensing portion 1, the control device 2 judges S13 whether the calculated speed exceeds the first predetermined speed A'.

Accordingly, when the calculated actual vehicle speed exceeds the predetermined vehicle speed A', the control device 2 judges if the actual vehicle speed could exceed the predetermined regulation speed D'.

Then, the control device 2 executes a deceleration of the actual vehicle speed.

The first predetermined speed A' is set lower than the predetermined regulation speed D' in order that the time delay that is generated from the control action for limiting the vehicle speed does not cause the actual vehicle speed to exceed the predetermined regulation speed D'.

However, if the actual vehicle speed does not exceed the predetermined speed A', the control device 2 returns to step S11. Next, after the control device 2 judges whether the actual vehicle speed exceeds the regulation speed, the control device 2 executes the action for normalizing the engine.

Accordingly, if the actual vehicle speed exceeds the first predetermined speed A', the control device 2 sets S14 the predetermined rate of change in accordance with the actual driving state and outputs S15 the control signals toward the ignition device, the control signals delaying the ignition timing to the state of the predetermined first gradient.

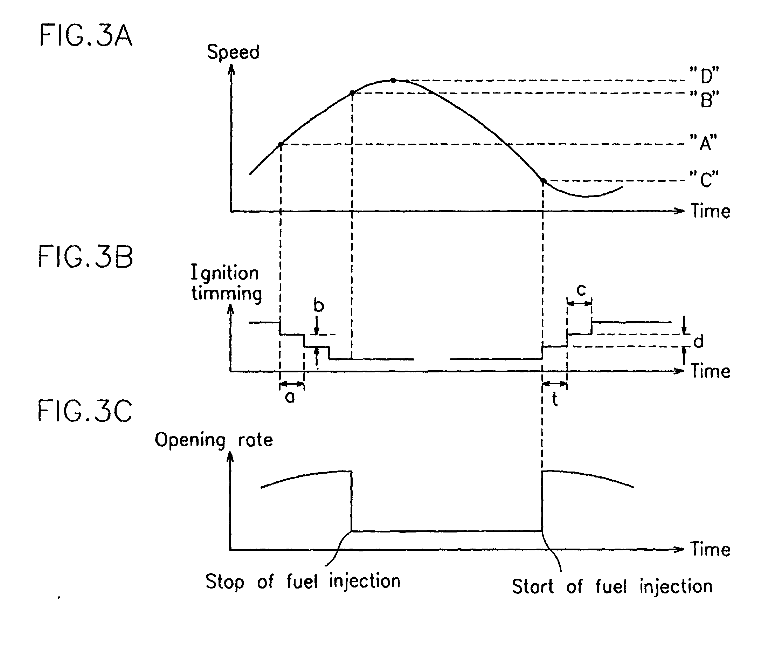

As illustrated in a graph B of Fig. 3, the amount of the variation b/a that is applicable to the each predetermined ignition time a and ignition timing b in accordance with the actual driving state is respectively predetermined and is respectively stored in a memory address of a memory unit so as to calculate the first gradient that controls the delay of the ignition timing.

The control device 2 reads the rate of change in accordance with an actual driving state, the actual driving state being judged by RPM or the degree of acceleration. Then, the control device 2 allows spark plugs to delay the ignition timing in accordance with the calculated rate of change.

The control device 2 allows a power transistor T31 for the switching action to operate and it allows ignition coils L31, L32 to transform high voltages.

Therefore, the high voltages, which are transformed through the ignition coils L31, L32 are applied by a distributor to each spark plug L33 - L36 so as to execute an ignition motion.

The ignition timing of the engine is gradually delayed as much as the above predetermined ignition timing so as to diminish an engine torque.

After delaying operation of the ignition device 3, the control device 2 reads S16 signals from the wheel speed sensing portion 1, calculates S17 the actual vehicle speed, and judges S18 whether the vehicle speed, which gradually increases, reaches the second predetermined speed B'.

If the vehicle speed, which is calculated by the control device 2 reaches the second predetermined speed B', it stops S19 the operation of the appropriate injection device 3 so as to stop the fuel injection like in a graph C of Fig. 3.

Therefore, the actual vehicle speed can be gradually decelerated thereby.

However, if the vehicle speed is not the same speed as the second predetermined speed B', the control device 2 compares S30 it with the first predetermined speed A' again so as to decide whether the speed is higher than the first predetermined speed A', then the control device 2 commands going to step S17 and judges the actual vehicle speed, or if the speed is lower than the first predetermined speed A', the control device 2 commands going to the lower step S26 and normalizes the ignition timing.

As the torque of the engine is already diminished by the delay of the ignition timing, which is executed in step S15, talk difference of the engine can be remarkably diminished thereby, talk difference occurring when the fuel injection is stopped by the control device.

Therefore, the problem of the engine shock caused by torque difference can be eliminated.

If the actual vehicle speed reaches the second predetermined speed B' and the fuel injection is stopped by the control device 2, the control device 2 reads S20 the signals from the wheel speed sensing portion 1 and judges S22 whether the calculated speed S21 is decelerated to the third predetermined speed C'.

Accordingly, if the actual vehicle speed is decelerated to the third predetermined speed, the control device 2 outputs S23 the signals toward the injection device 3 so as to inject the fuel.

But, if the actual vehicle speed is not equal to the third predetermined speed C', the control device 2 returns to the above step S20 and judges the driving state of the vehicle.

Because the driving time of the appropriate injection device 3 in the action order of the fuel injection is changed in accordance with the driving state of the vehicle, the predetermined appropriate amount of fuel is injected in accordance with the driving state of the vehicle.

Accordingly, the control device 2 applies electricity in a solenoid coil so as to maintain the degree of opening of needle valves as much as the predetermined time, the needle valve being internally equipped in the appropriate injection device.

As appropriate amount of fuel is injected again in accordance with the driving state of the vehicle, the vehicle speed that is decelerated by the interception of the fuel is recovered.

After the fuel is injected again, the control device 2 counts S24 the elapsed time and judges S25 whether the elapsed time is equal to the predetermined time.

If the fuel is injected again and the elapsed time passes, the control device 2 executes action for advancing the ignition timing.

Accordingly, as illustrated in a graph B of Fig. 3, the control device 2 sets up S26 the advance rate of change d/c that is already set in accordance with the driving state of the vehicle and advances S27, S28 in sequence to in accordance with the driving state of the vehicle.

If the actual vehicle speed is limited by the speed limit action for the vehicle as the above, the amount of the fuel injection and the ignition timing are changed step by step in accordance with the variation of the actual vehicle speed.

Hence, as the invention can prevent harmful changes in the state of the engine, which is generated by the excessive difference in the amounts of fuel injection, and shocks caused by operational changes of the engine can also be prevented.

In addition, the invention can protect the engine because it changes the operational state of the engine in sequence without harm.

While this invention has been described in connection with what is presently considered to be the most practical and preferred embodiments, it is to be understood that the invention is not limited to the disclosed embodiment, but, on the contrary, it is intended to cover various modifications and equivalent arrangements included within the spirit and scope of the appended claims.

## Claims

1. A speed limit control method for vehicles comprising the steps of:
a) judging (S13) whether the actual vehicle speed reaches a first predetermined speed (A);
b) delaying (S15) the ignition timing when the actual vehicle speed reaches the first predetermined speed (A);
c) judging (S 18) whether the actual vehicle speed reaches a second predetermined speed (B) after delaying the ignition timing; and
d) stopping (S19) injection of fuel when the vehicle speed reaches the second predetermined speed (B).

2. The speed limit control method of claim 1 further comprising the steps of:
e) judging (S22) whether the actual vehicle speed reaches a third predetermined speed (C) after stopping (S19) injection of fuel;
f) starting again (S23) injection of fuel when the actual vehicle speed reaches the third predetermined speed (C); and
g) advancing (S27) the ignition timing when an elapsed time counted (S24) after starting again (S23) injection of fuel reaches a predetermined time.

3. The speed limit control method of claim 2, wherein delaying the ignition timing is performed by calculating a first rate of change of the engine when the actual vehicle speed reaches the first predetermined speed; and advancing the ignition device is performed in accordance with a calculated second rate of change until the state of the vehicle returns to a normal condition.

4. The speed limit control method for vehicles of claim 3, wherein the first rate of change is already predetermined by the ignition timing and the amount of variation of the ignition timing in accordance with the driving state of the vehicle.

5. The speed limit control method for vehicles of claim 3, wherein the second rate of change is sequentially advanced to an appropriate ignition timing for the driving state after predetermining the amount of variation in accordance with the driving state of the vehicle.

6. The speed limit control method for vehicles of claim 3, wherein the first predetermined speed is set lower than the predetermined regulation speed in order that the time delay that is generated from the control action for limiting the vehicle speed does not cause the problem of the actual vehicle speed exceeding the predetermined regulation speed.

## Patentansprüche

1. Geschwindigkeitsbegrenzungs-Steuerverfahren für Fahrzeuge, das die folgenden Schritte umfaßt:
a) Beurteilen (S13), ob die Ist-Fahrgeschwindigkeit eine erste vorgegebene Geschwindigkeit (A) erreicht;
b) Verzögern (S15) des Zündzeitpunkts, wenn die Ist-Fahrgeschwindigkeit die erste vorgegebene Geschwindigkeit (A) erreicht;
c) Beurteilen (S18), ob die Ist-Fahrgeschwindigkeit eine zweite vorgegebene Geschwindigkeit (B) erreicht, nachdem der Zündzeitpunkt verzögert worden ist; und
d) Unterbrechen (S19) der Kraftstoffeinspritzung, wenn die Fahrgeschwindigkeit die zweite vorgegebene Geschwindigkeit (B) erreicht.

2. Geschwindigkeitsbegrenzungs-Steuerverfahren nach Anspruch 1, das ferner die folgenden Schritte umfaßt:
e) Beurteilen (S22), ob die Ist-Fahrgeschwindigkeit eine dritte vorgegebene Geschwindigkeit (C) erreicht, nachdem die Kraftstoffeinspritzung unterbrochen worden ist (S19);
f) erneutes Beginnen (S23) der Kraftstoffeinspritzung, wenn die Ist-Fahrgeschwindigkeit die dritte vorgegebene Geschwindigkeit (C) erreicht; und
g) Voreilenlassen (S27) des Zündzeitpunkts, wenn eine verstrichene Zeit, die ab dem erneuten Beginn (S23) der Kraftstoffeinspritzung gezählt wird (S24), eine vorgegebene Zeit erreicht.

3. Geschwindigkeitsbegrenzungs-Steuerverfahren nach Anspruch 2, bei dem die Verzögerung des Zündzeitpunkts durch Berechnen einer ersten Änderungsrate des Motors ausgeführt wird, wenn die Ist-Fahrgeschwindigkeit die erste vorgegebene Geschwindigkeit erreicht; und das Voreilenlassen der Zündvorrichtung in Übereinstimmung mit einer berechneten zweiten Änderungsrate ausgeführt wird, bis der Zustand des Fahrzeugs in einen normalen Zustand zurückkehrt.

4. Geschwindigkeitsbegrenzungs-Steuerverfahren für Fahrzeuge nach Anspruch 3, bei dem die erste Änderungsrate bereits durch den Zündzeitpunkt und den Änderungsbetrag des Zündzeitpunkts in Übereinstimmung mit dem Antriebszustand des Fahrzeugs vorgegeben ist.

5. Geschwindigkeitsbegrenzungs-Steuerverfahren für Fahrzeuge nach Anspruch 3, bei dem eine sequentielle Voreilung der zweiten Änderungsrate in Richtung zu einem geeigneten Zündzeitpunkt für den Antriebszustand bewirkt wird, nachdem der Änderungsbeträg in Übereinstimmung mit dem Antriebszustand des Fahrzeugs vorbestimmt worden ist.

6. Geschwindigkeitsbegrenzungs-Steuerverfahren für Fahrzeuge nach Anspruch 3, bei dem die erste vorgegebene Geschwindigkeit niedriger als die vorgegebene Regelungsgeschwindigkeit gesetzt wird, damit die Zeitverzögerung, die anhand der Steuerwirkung für die Begrenzung der Fahrgeschwindigkeit erzeugt wird, nicht das Problem hervorruft, daß die Ist-Fahrgeschwindigkeit die vorgegebene Regelungsgeschwindigkeit übersteigt.

## Revendications

1. Un procédé de contrôle de limite de vitesse comprenant les étapes consistant :
à déterminer (S13) si la vitesse réelle du véhicule atteint une première vitesse prédéterminée (A) ;
à retarder (S15) l'instant d'allumage lorsque la vitesse réelle du véhicule atteint la première vitesse prédéterminée (A) ;
à déterminer (S18) si la vitesse réelle du véhicule atteint une deuxième vitesse prédéterminée (B) après le retard de l'instant d'allumage ; et
à stopper (S19) l'injection de carburant lorsque la vitesse du véhicule atteint la deuxième vitesse prédéterminée (B).

2. Le procédé de contrôle de limite de vitesse selon la revendication 1, comprenant en outre les étapes consistant :
à déterminer (S22) si la vitesse réelle du véhicule atteint une troisième vitesse prédéterminée (C) après l'arrêt (S19) de l'injection du carburant ;
à faire repartir (S23) l'injection de carburant lorsque la vitesse réelle du véhicule atteint la troisième vitesse prédéterminée (C) ; et
à avancer (S27) l'instant d'allumage lorsque le temps qui s'est écoulé compté (S24) après le redémarrage (S32) de l'injection de carburant atteint une durée prédéterminée.

3. Le procédé de contrôle de limite de vitesse selon la revendication 2, dans lequel le retard de l'instant d'allumage est réalisé en calculant un premier taux de variation du moteur à combustion lorsque la vitesse réelle du véhicule atteint la première vitesse prédéterminée ; et dans lequel l'avance du dispositif d'allumage est réalisée en correspondance à un deuxième taux de variation calculé jusqu'à ce que l'état du véhicule revienne à un état normal.

4. Le procédé de contrôle de limite de vitesse pour véhicules selon la revendication 3, dans lequel le premier taux de variation est déjà prédéterminé par l'instant d'allumage et la quantité de variation de l'instant d'allumage en correspondance avec l'état de roulage du véhicule.

5. Le procédé de contrôle de limite de vitesse pour véhicules selon la revendication 3, dans lequel le deuxième taux de variation est avancé de façon séquentielle jusqu'à un instant d'allumage approprié pour l'état de roulage après avoir prédéterminé la quantité de variation en correspondance à l'état de roulage du véhicule.

6. Le procédé de contrôle de limite de vitesse pour véhicules selon la revendication 3, dans lequel la première vitesse prédéterminée est fixée à une valeur inférieure à la vitesse de régulation prédéterminée afin que le retard temporel qui est généré à partir de l'action de contrôle pour limiter la vitesse du véhicule ne provoque pas le problème consistant à ce que la vitesse réelle du véhicule dépasse la vitesse de régulation prédéterminée.
